# EUROPEAN PATENT APPLICATION

(11) **EP 3 067 183 A1**
(43) Date of publication of application: **14.09.2016**
(21) Application number: 15158946.2
(22) Date of filing: 13.03.2015
(51) Int. Cl.: B29C 65/02, B29C 65/18, B65B 7/14, B65B 51/10, B65D 35/00, B29L 23/20

(54) **DEVICE AND METHOD FOR SEALING A FLEXIBLE PACKAGE OF COLLAPSIBLE TYPE**

(71) Applicant: Ecolean AB, 251 08 Helsingborg (SE)
(72) Inventor: Borgström, Magnus, 254 35 Helsingborg (SE); Friberg, Lennart, 231 55 Trelleborg (SE); Östholm, Lars, 263 62 Viken (SE)
(74) Representative: Awapatent AB

(57) **Abstract**

In accordance with the present inventive concept, there is provided a device for sealing a flexible package (200) of collapsible type. The device comprises a first sealing unit (120) arranged to provide a first seal (302) extending transverse a filling channel of the flexible package (200) and a second sealing unit (130) arranged to provide a second seal (304) extending transverse a filling channel of the flexible package (200). The second seal (304) overlaps the first seal (302) such that a combined seal is provided comprising a top portion (312) formed solely by the first sealing unit (120), an intermediate portion (316) formed by the first (120) and the second (130) sealing unit, and a bottom portion (314) formed solely by the second sealing unit (130). Furthermore, the present inventive concept also relates to an associated method.

## Description

### Field of the invention

The present inventive concept relates to a device for sealing packages. More specifically, the present inventive concept relates to a device for sealing a flexible package of collapsible type. The present inventive concept also relates to a corresponding method.

### Background art

A package of collapsible type typically comprises a filling chamber in which a product, such as a liquid, may be contained. During a filling procedure of the package, the product may be filled by inserting a nozzle in a filling channel of the package. Subsequently, the package has to be sealed so that the product cannot escape from the filling chamber. By way of example, the sealing may be performed by means of welding, whereby the package is placed between engagement surfaces of a pair of jaws which are arranged to engage with each other and thereby exert pressure on a portion of the package for providing a seal.

The jaws may be heated. For example, GB943457A discloses how to form a seam between unsupported thermoplastic sheets by using heated jaws. The sheets are applied together and a seam is provided by utilizing continuously heated welding jaws. By means of additional pressing jaws, a subsequent second hot pressing is performed on a part of the width of the seam so as to remove gas bubbles or blisters which are located within the seam.

However, the process disclosed in GB943457A is a comparatively slow process and there is need for a faster method and device for providing seals.

### Summary of the invention

It is therefore an object of the present inventive concept to provide a more efficient device for sealing packages. Another object is to provide a device which provides more reliable seals on packages.

It is also an object of the present inventive concept to provide a related method for sealing packages.

According to a first aspect of the invention, there is provided a device for sealing a flexible package of collapsible type. The device comprises a first sealing unit arranged to provide a first seal extending transverse a filling channel of the flexible package and a second sealing unit arranged to provide a second seal extending transverse a filling channel of the flexible package. The second seal overlaps the first seal such that a combined seal is provided comprising a top portion formed solely by the first sealing unit, an intermediate portion formed by the first and the second sealing unit, and a bottom portion formed solely by the second sealing unit.

By a flexible package of collapsible type is here meant a package or container which may assume a collapsed state when the package is empty, i.e. non-filled. Moreover, the package is arranged to be filled by a product whereby it assumes an expanded state. The package comprises at least two flexible walls. Two opposing side walls of the package are flexible and may be joined in connecting portions to define a compartment. Preferably, the walls are thin. Additionally, there may be a bottom wall. A volume of the compartment depends on the relative position of the opposing side walls. The shape of the flexible package may correspond to the shape of the product. Optionally, there may be a handle portion provided on the flexible package for carrying the package. Additionally, there may be gas-filled ducts provided in the connecting portions of the package for increasing the stability of the package and for improving the handling of the package. The handle portion may be formed by the gas-filled duct.

The material of the package may comprise a laminate of several layers. For example, there may be a fluid-tight layer and a gas-tight layer. The layers may comprise materials having different melting points.

The material of the package may comprise at least one of a mineral, aluminium, and a plastic material, for example polymers, such as polyolefin. In a first non-limiting example, the package comprises a plastic material and a chalk material. In a second non-limiting example, the package is solely comprised out of a plastic material. In particular, the package may comprise a recyclable material. The material of the package may comprise a filler and a binder. It is appreciated that the package may comprise other materials and that the choice of materials are not limited to the examples presented above. Preferably, however, the flexible package comprises a material which is arranged to melt above a certain melting temperature.

The flexible package may be filled with a product, such as a product in liquid form or in powder form. The product may be a liquid food product such as dairy products, such as milk, water, juice, wine, lemonade, a beverage, etc. It is understood that other similar products suitable for be contained in the flexible package may be used.

The first and/or second seals are provided for retaining the product in the flexible package. The first and/or second seals may extend transversely across the entire filling channel. In particular, at least one of the top portion, the intermediate portion and the bottom portion may extend across the entire filling channel. The first and/or second seals may extend transversely across a portion of an upper portion of the flexible package, wherein the package is provided in an upright position. Alternatively, the first and/or second seals may extend transversely across the entire upper portion of the flexible package.

Sealing may be provided by means of welding. The first and second seals may be provided by means of subjecting a portion of the flexible package to at least one of heat, pressure, etc. during a predetermined time duration. The amount of heat, the amount of pressure, and the predetermined time duration may be dependent on the type of package, the material comprised in the package, a thickness of walls of the package, the type of seal to be provided, a desired level of quality of the seal, etc. The seal may be provided by melting portions of the material of the flexible package. In a first example, a portion of a plastic material comprised in the package may melt for providing the seal. In a second example, a portion of a layer comprised in a laminate of layers of the package may melt for providing the seal. In the latter example, the different layers in the laminate may have different melting points.

Optionally, the seal may cooled after heating the seal by means of a cooling unit.

According to a first example, the strength is constant throughout the first as well as the second seal. Thereby, the strength of the overlapping intermediate portion may also be constant. The strengths of the first and the second seal may be the same or, alternatively, different.

According to a second example, the strengths are varying in portions or throughout the first and/or the second seal. The strengths may be varying along a transverse direction of the package. Alternatively, or additionally, the strengths may be varying along a longitudinal direction of the package. The strength may be decreasing towards outer edges of the first and the second seal. Thereby, a smoother transition from the seal to unsealed portions of the flexible package may be provided.

In accordance with the inventive concept, there is provided a device which is arranged to implement a sealing operation which is split in two separate operations by utilizing two sealing units. Indeed, the sealing operation is partly performed at the first sealing unit and is partly performed at the second sealing unit.

The sealing operation may be performed intermittently. The second seal may be provided on a first package already having a first seal simultaneously as the first seal is provided on a second package. Subsequently, the second seal may be provided on the second package simultaneously as the first seal is provided on a third package, etc. Thus, the inventive device may provide seals on flexible packages more efficiently. In particular, the inventive device may operate faster than known devices in the prior art.

Alternatively, the sealing operation may be performed continuously.

The sealing may be controlled by at least one parameter. The parameter may be a temperature parameter, a pressure parameter and a time parameter as will be described in more detail below. Preferably, the temperature parameter and the pressure parameter are chosen such that the flexible package does not become damaged during the sealing operation at the first and/or sealing unit. Optionally, a cooling unit for cooling the package in a region comprising the first and/or second seal may be provided. Moreover, the temperature parameter and the pressure parameter may be chosen below certain maximal temperature and maximal pressure parameter values. A typical problem in the prior art is that, even if the sealing operation itself is highly improved, it still requires more, or much more, time than any of the other operations performed by other units comprised in a production line which comprises a sealing unit for performing a sealing operation as well as additional units for performing other operations, such as a package opening operation, a filling operation, transport operations, package adjustment operations, etc. Said operations may be performed by a package opening unit, a filling unit, a transport unit, package adjustment units, etc. The operations may be performed simultaneously; for example, while the filling channel of a first package is opened up, a second package is filled and a third package is sealed, etc. In the prior art, each of the above mentioned operations are typically performed at separate, stationary stations. By splitting the sealing operation in two operations, which are performed at the first and the second sealing unit according to the present inventive concept, the downtime at the respective sealing unit may be reduced considerably. By downtime we here mean an additional time duration for performing the sealing operation exceeding the time duration of other operations in the production line. In particular, in an intermittent production line the downtime may be significant since the operation taking the longest time determines the latency in the production. According to a non-limiting example, the time duration required for sealing the package may be determined if at least one of the temperature parameter and the pressure parameter are given.

In view of the above, the sealing operation may be made much more efficient in the production line which comprises one or several sealing operations. Also, the capacity of the production line may be increased without the need of adding additional multiple lines, such as a plurality of parallel lines. It is noted that the capacity of a filling machine which implements the operations discussed above is inter alia determined by the time required to perform these operations, and more specifically by the operation requiring the longest time to perform.

The sealing is preferably performed such that a sufficient seal is not provided by one of the sealing units; rather, both the first and the second sealing units are needed to provide a sufficient seal. By sufficient seal is here meant that the seal, or combined seal, fulfils a set of seal criteria. The seal criteria may comprise a strength criterium, a width criterium, a length criterium, a thickness criterium, a criterium with respect to environmental conditions such as temperature or humidity, etc. The sealing operation is performed such that the two seals are offset, whereby a combined seal is formed in which a sufficient seal is provided. The combined seal comprises an intermediate portion wherein the first and the second seal are overlapping. In the intermediate portion the combined action of the first sealing unit and the second sealing unit is sufficient to obtain a sufficient seal. By action by a sealing unit is here meant that the flexible package is subject to at least one of a heating action and a pressure action during a time duration.

The first and the second sealing unit may perform sealing operations during a first and a second sealing time, respectively, for forming a total sealing time. The total sealing time may be a sum of the first and the second sealing times. A sufficient seal may be provided once the total sealing time is longer than a certain time period. The time period may be predetermined.

The combined seal comprises three portions: a top portion having an insufficient seal, an intermediate portion having a sufficient seal, and a bottom portion having an insufficient seal. Hence, another advantage of the present inventive concept is that the device may provide a gradual transition from a strong seal to portions having no seal on the flexible package. More specifically, the intermediate portion may provide a stronger seal than the top portion and the bottom portion. Additionally, the top portion and the bottom portion may provide seals next to unsealed portions of the flexible package. As a consequence, there may be provided a seal which in a longitudinal direction of the flexible package has an unsealed portion, a bottom portion, an intermediate portion, a top portion, and an unsealed portion, thereby providing the sequence: no seal, an insufficient seal, a sufficient seal, an insufficient seal, and no seal. In particular, a direct transition from a sufficient seal to no seal may be avoided and a more gentle transition may be provided. As a consequence, the flexible package may be subject to less strain. Thereby, the device provides a more reliable seal.

An additional advantage of inventive device is that it provides a seal which may exhibit an improved strength. Indeed, by providing a first and a second seal, the combined seal may provide a stronger seal.

According to one embodiment the device further comprises a transfer unit arranged to transfer the flexible package from the first sealing unit to the second sealing unit. By means of this embodiment, the device may provide a seal in an even more efficient manner. By way of example, a first flexible package which has obtained a first seal may be transferred from the first sealing unit to the second sealing unit for obtaining a second seal, while a second flexible package is transferred to the first sealing unit for obtaining a first seal. The same procedure may be repeated for a plurality of flexible packages which are feeded into a filling machine, or production line, comprising the device according to the present inventive concept and other units as described in the above.

According to one embodiment, the first seal has a width in the range of 1 to 5 millimeters. According to another embodiment, the second seal has a width in the range of 1 to 5 millimeters. According to yet another embodiment, the intermediate portion has a width in the range of 1 to 5 millimeters. The width may be measured in a longitudinal direction of the flexible package. Alternatively, the width may be measured in a transverse direction of the flexible package. By means of these embodiments, the formation of blisters may be prevented since any vapor formed by residues during the sealing operations is allowed to escape sideways. In a non-limiting example, each of the first seal and the second seal has a width of 4 millimeters and the offset is 2 millimeters, resulting in an overlapping portion of 2 millimeters.

According to one embodiment, operating parameters of the first and second sealing unit are set such that a sealing characteristic above a threshold value is obtained in the intermediate portion, wherein the operating parameters comprise a time parameter, a temperature parameter and a pressure parameter. Thereby, a sufficient seal may be provided in the intermediate portion. A quality of the seal may be adjusted by adjusting the time parameter, the temperature parameter and the pressure parameter. By way of example, the seal may be improved by at least one of using a higher temperature, using a higher pressure, and by letting the first and/or the second sealing unit operate during a longer period of time. Clearly, this example is preferably subject to the restrictions explained in the above regarding keeping the flexible package undamaged.

According to one embodiment, the first and second seals are parallel. Thereby, the intermediate portion, and hence a sufficient seal, may be provided transverse the entire filling channel.

According to one embodiment, the first and/or second sealing unit comprises a permanently heated sealing jaw. The heated sealing jaw may provide the first and/or second seal by transferring heat energy to the flexible package where the first and/or the second seal are to be located. The heat energy may be utilized for melting portions of a material comprised in the flexible package, e.g. in side walls of the package. In a non-limiting example, the permanently heated sealing jaw is formed by a metal.

According to one embodiment, the first and/or second sealing unit comprises an abutment jaw having an engagement portion arranged to engage with the flexible package for providing the first and/or second seal. By means of this embodiment, the first and/or the second seal may be provided by pressing the flexible package between the abutment jaw and the heated sealing jaw where the first and/or the second seal are to be located.

The abutment jaw of the first and/or second sealing unit may comprise a tapering engagement notch. The notch may determine the width of the first and/or the second seal. In a non-limiting example, the tapering engagement notch is formed by an elastic material. In another non-limiting example, the tapering engagement notch is formed by a metal.

The permanently heated sealing jaw and the abutment jaw in the first sealing unit may be offset with respect to the permanently heated sealing jaw and the abutment jaw in the second sealing unit. Thereby, the first sealing unit may provide a first seal and the second sealing unit may provide a second seal, whereby the first seal is offset with respect to the second seal. The offset of the heated sealing jaw and the abutment jaw may be provided by displacing at least one of the heated sealing jaw and the abutment jaw from each other. The displacement may be carried out in a vertical direction so that the first and the second seals are offset in a longitudinal direction of the package, given that the package is sealed in an upright position.

According to one embodiment, the first and second sealing units are stationary. Thereby, the flexible package has to be transferred to the first and second sealing units. By way of example, the transfer may be provided by means of the transfer unit described in the above.

According to an alternative embodiment, the first and/or second sealing unit are movable.

In a first example, the first and second sealing units are provided separated in space. In a second example, the first and second sealing units are provided at the same location.

According to yet another embodiment, at least three sealing units are provided for providing at least three seals. The at least three seals are combined into a combined seal, thereby comprising one or several overlapping portions. According to this embodiment, the transition from the seal to the unsealed portions of the flexible package may become even more smooth.

According to a second aspect of the invention, there is provided a method for sealing a flexible package of collapsible type comprising providing a first seal extending transverse a filling channel of the flexible package and providing a second seal extending transverse a filling channel of the flexible package. The second seal overlaps the first seal such that a combined seal is provided comprising a top portion formed solely by the first sealing unit, an intermediate portion formed by the first and the second sealing unit, and a bottom portion formed solely by the second sealing unit.

The details and advantages of the second aspect of the invention are largely analogous to those of the first aspect of the invention, wherein reference is made to the above.

According to one embodiment, the method further comprises transferring the flexible package from the first sealing unit to the second unit.

According to one embodiment, the first seal and the second seal are provided intermittently. An advantage of this embodiment is that the seal may be provided even more efficiently since the downtime may be further reduced.

It is noted that the steps of the method does not have to be performed in the exact order disclosed above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief Description of the Drawings

The above, as well as additional objects, features and advantages of the present invention will be better understood through the following illustrative and non-limiting detailed description of preferred embodiments of the present invention, with reference to the appended drawings, where the same reference numerals will be used for similar elements, wherein:
Fig. 1 is a schematic side view of a production line comprising an embodiment of a device for sealing a flexible package according the present inventive concept.
Fig. 2 is a perspective view of the production line in Fig. 1.
Fig. 3 is a schematic view of the permanently heated sealing jaw and the abutment jaw comprised in the first and the second sealing units in Fig. 1 and Fig. 2.
Fig. 4 is a schematic side view of the first and the second sealing unit comprised in the device in Fig. 1 and 2.
Fig. 5a is a schematic front view of a flexible package wherein a seal has been provided in accordance with an embodiment of the inventive concept.
Fig. 5b is a schematic front view of another flexible package wherein a seal has been provided in accordance with another embodiment of the inventive concept.
Fig. 6 is a flow chart illustrating a method for sealing a flexible package according to an embodiment of the present inventive concept.

### Detailed Description of Preferred Embodiments

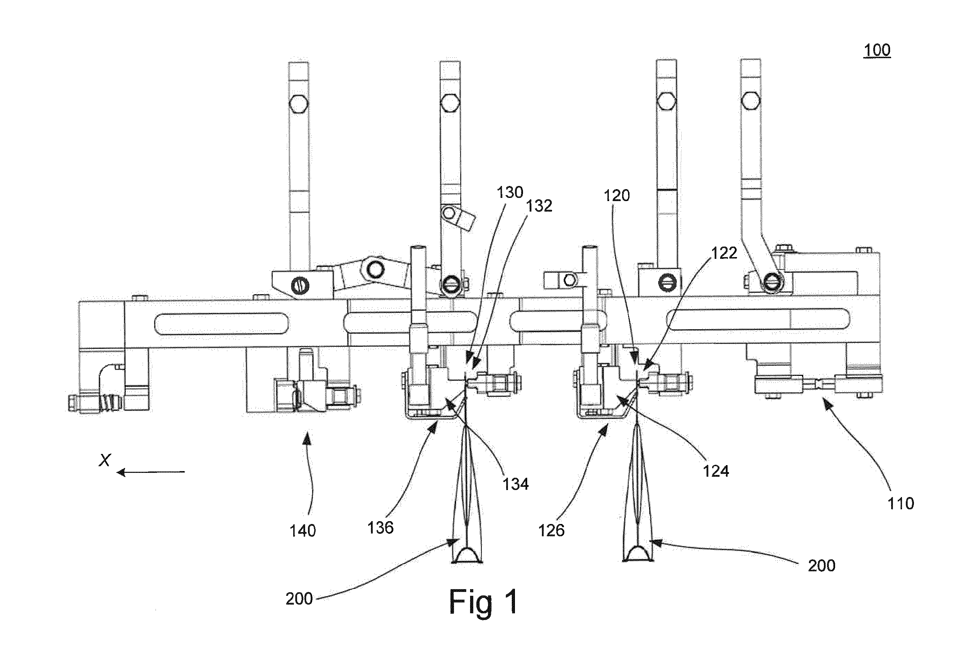

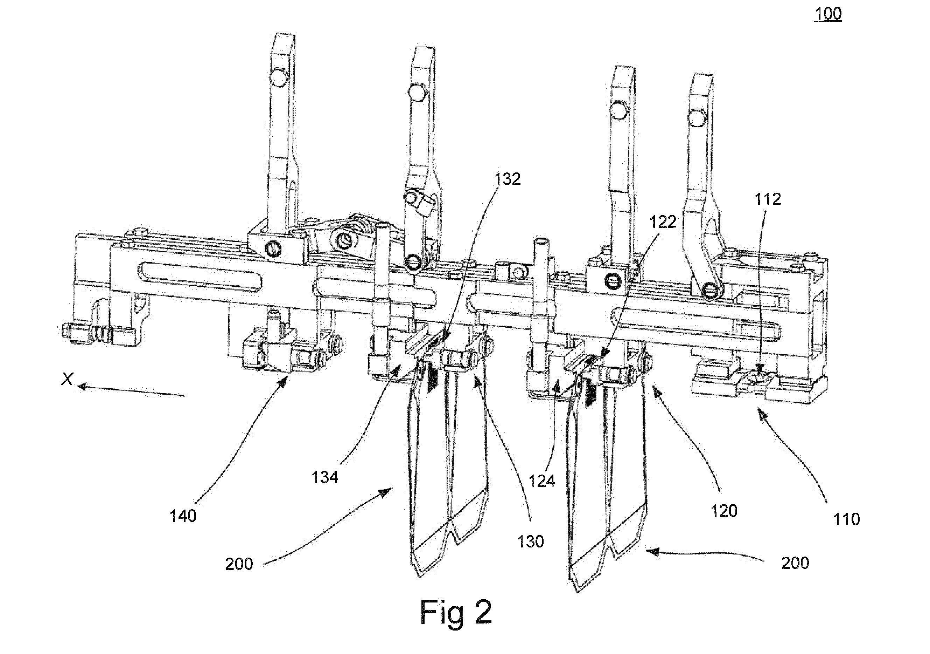

Next, the inventive concept will be described with reference to Fig. 1 and 2 which illustrate a schematic side view and a schematic perspective view, respectively, of a production line 100 for filling and sealing a plurality of flexible packages 200 of collapsible type. As will be detailed below, the production line 100 comprises an embodiment of a device for sealing a flexible package according the present inventive concept. The production line 100 may be referred to as a filling machine.

In the following, the wording "package" 200 and wording "flexible package" 200 will be used interchangably.

The plurality of flexible packages 200 may be provided from a material web according to methods well-known to a person skilled in the art. According to the present embodiment, the packages 200 are provided to the production line 100 in the form of a continuous web of packages (not shown). The web of packages are rolled up to be supplied in roll form to the production line 100.

The rolls are arranged to be unwound and fed to the production line 100. Initially, the packages 200 may be fed intermittently edgewise and subsequently the packages 200 may be fed intermittently broadwise.

The production line 100 comprises a filling unit 110, a first sealing unit 120, a second sealing unit 130 and a gas-filling unit 140. The first sealing unit 120 and the second sealing unit 130 are comprised in an embodiment of the inventive device for sealing the flexible package 200. The packages 200 are handled at each of these units in consecutive order in a direction as indicated by the arrow X in Fig. 1 and 2. The units 110, 120, 130, 140 are arranged along a horizontal direction which is a longitudinal direction of the production line 100. Moreover, according to the present embodiment the units 110, 120, 130, 140 are arranged essentially equidistantly from each other.

There is also provided a transfer unit for transferring the flexible packages 200 between the units 110, 120, 130, 140. In particular, the transfer unit is arranged to transfer the packages 200 from the first sealing unit 120 to the second sealing unit 130. For clarity, the transfer unit has been left out from Fig. 1 and 2. According to one example, the transfer unit is arranged to transfer the flexible packages 200 between the units 110, 120, 130, 140 by means of an essentially semi-circular movement, whereby the flexible packages 200 arrive at each unit 110, 120, 130, 140 by means of an substantially vertical motion. According to another example, the transfer unit is arranged to transfer the flexible packages 200 between the units 110, 120, 130, 140 by means of an essentially horizontal movement, whereby the flexible packages 200 arrive at each unit 110, 120, 130, 140 by means of an substantially horizontal motion.

In Figs. 1 and 2, two pairs of flexible packages 200 are displayed, but it is understood that there may be more packages 200 in the production line 100 simultaneously. In particular, there may be a pair of flexible packages 200 at the filling unit 110 and a pair of flexible packages 200 at the gas-filling unit 140, while the pairs of flexible packages 200 are being located at the sealing units 120 and 130.

It is noted that for clarity only a part of the production line 100 is shown in Fig. 1 and Fig. 2. Clearly, there may be another similar part of the production line (not shown) for providing filling and sealing of the other package 200 of the pair of flexible packages. In fact, there may be a plurality of production lines for providing filling and sealing of a plurality of flexible packages 200. By way of example, each production line may be arranged to fill and seal a pair of flexible packages. The plurality of production lines may be provided in parallel.

In the following, a single package 200 will be described, but it is cleat that any number of packages 200 may be treated similarly.

The filling unit 110 is arranged to fill the flexible package 200 with a liquid product. In a filling operation, a filling channel of the package 200 is opened by means of a suction cup, thereby forming an opening. The opening of the flexible package 200 is defined by two opposite side walls of the package. A filling nozzle (not shown) is then guided through a hole 112 formed between a first and a second gripping means into the filling channel via the opening of the flexible package 200. More specifically, each gripping means comprises two prongs and, during the filling operation, the prongs on the first and the second gripping means are arranged to exert pressure on each other whereby the hole 112 is formed. The package 200 is filled when it assumes an upright position. The filling nozzle is introduced into the filling channel by means of a relative vertical displacement between the filling nozzle and the package 200.

Before inserting the filling nozzle into the filling chamber of the package 200, a top seal of the package 200 is arranged to be removed in order to access the filling channel of the package 200. By way of example, this operation may be performed at a separate removal unit comprised in the production line 100. Additionally, there is a separation unit (not shown) located before the filling unit 110 for separating the packages 200 from each other, i.e. wherein the web of packages 200 which provided on the roll are separated. In a non-limiting example, the edgewise feed referred to above may comprise the act of removing a top seal in order to open the filling channel of the package 200 as well as the act of separating the packages 200.

In Fig. 1 and Fig. 2, the flexible packages 200 are shown in a filled state and an unfilled state, respectively. However, with respect to Fig. 2 it is realized that once the flexible packages 200 have passed the filling unit 110, they have been filled with the liquid product as in Fig. 1, whereby the flexible packages 200 assume an expanded state wherein the side walls of each of the packages 200 are separated.

The first sealing unit 120 is arranged to provide a first seal to the flexible package 200. The first sealing unit 120 comprises a first abutment jaw 122 and a first permanently heated sealing jaw 124. Additionally, the first sealing unit 120 comprises a first protection cover 126 for keeping the flexible package 200 separated from the first permanently heated sealing jaw 124.

Similarly, the second sealing unit 130 is arranged to provide a second seal to the flexible package 200. The second sealing unit 130 comprises a second abutment jaw 132 and a second permanently heated sealing jaw 134. Additionally, the second sealing unit 130 comprises a second protection cover 136 for keeping the flexible package 200 separated from the second permanently heated sealing jaw 134.

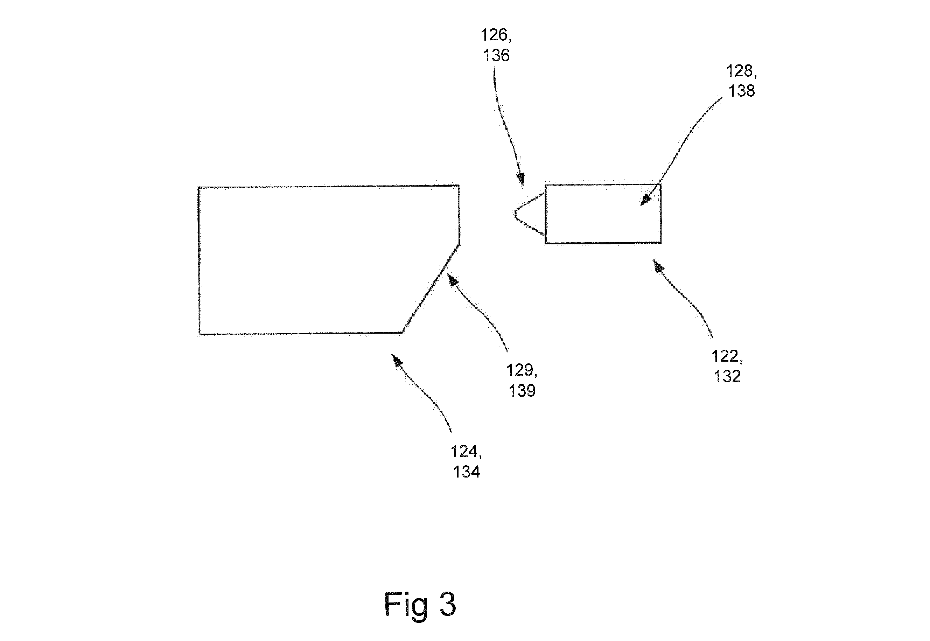

According to present embodiment, the first 120 and the second 130 sealing unit comprises the same components. Fig. 3 is a schematic view of the first 122 and the second 132 abutment jaw and the first 124 and the second 134 permanently heated sealing jaw which are comprised in the first 120 and the second 130 sealing units in Fig. 1 and 2. It is understood that the abutment jaws 122, 132 and the permanently heated sealing jaws 124, 134 have an extension in a transverse direction, i.e. in a direction normal to the cross-sectional planar surface displayed in Fig. 3. In Fig. 2 it may be seen that, according to the present embodiment, a width of the abutment jaws 122, 132 as well as a width of the permanently heated sealing jaws 124, 134 substantially correspond to a width of an upper portion of the package 200.

Clearly, according to an alternative embodiment, the first 120 and the second 130 sealing unit may comprise different components. For example, the abutment jaws and/or the sealing jaws may be designed differently.

The first abutment jaw 122 comprises a first tapering engagement notch 126 and the second abutment jaw 132 comprises a second tapering engagement notch 136. The notch 126 and 136 determine a width of the first and the second seal, respectively. According to the present embodiment, the tapering engagement notches 126, 136 are formed by an elastic material.

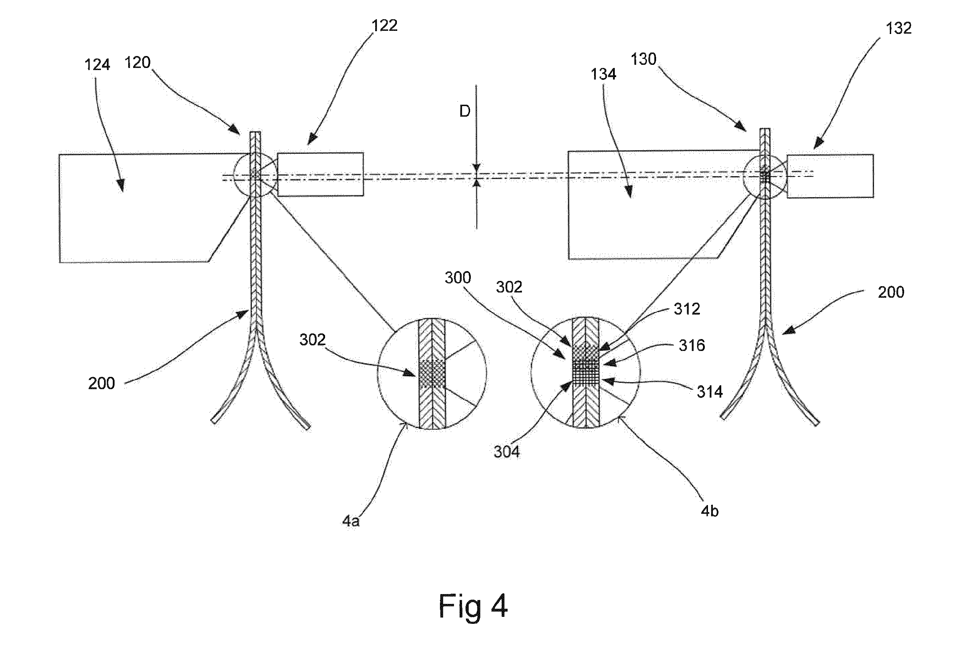

In Fig. 4 there is illustrated a schematic side view of the first sealing unit 120 to the left and the second sealing unit 130 to the right. It is also illustrated how to provide a combined seal 300 of the flexible package 200 extending transverse the filling channel of the flexible package 200 at the upper portion thereof. The resulting combined seal 300 comprises a first seal 302 and a second seal 304.

Incidentally, note that the positions of the first 120 and second 130 sealing units in Fig. 4 have been interchanged as compared to Figs. 1 and 2.

As shown in the enlargement 4a in Fig. 4, the first sealing unit 120 is arranged to provide the first seal 302 on the flexible package 200 by means of the first abutment jaw 122 and the first permanently heated sealing jaw 124. More specifically, in operation the first abutment jaw 122 is pressed towards the first permanently heated sealing jaw 124 whereby the first seal 302 is provided on an upper portion of the flexible package 200, which in operation is placed between the first abutment jaw 122 and the first permanently heated sealing jaw 124. A first portion of the material in the upper portion of the package 200 is melted by the action of the first abutment jaw 122 and the first permanently heated sealing jaw 124 for forming the first seal 302.

Moreover, in the enlargement 4b in Fig. 4 it is shown that the second sealing unit 130 is arranged to provide the second seal 304 on the flexible package 200 by means of the second abutment jaw 132 and the second permanently heated sealing jaw 134. Analogously to the first sealing unit 120, in operation the second abutment jaw 132 is pressed towards the second permanently heated sealing jaw 134 whereby the second seal 304 is provided on an upper portion of the flexible package 200, which in operation is placed between the second abutment jaw 132 and the second permanently heated sealing jaw 134. A second portion of the material in the upper portion of the package 200 is melted by the action of the second abutment jaw 132 and the second permanently heated sealing jaw 134 for forming the second seal 304. Part of the second portion overlaps with the first portion.

The second seal 304 is offset with respect to the first seal 302. More specifically, the second seal 304 is displaced in a longitudinal direction of the flexible package 200 with respect to the first seal 302. This offset is implemented by displacing the second sealing unit 130 by a distance D with respect to the first sealing unit 120 in a vertical direction as shown in Fig. 4.

Moreover, the offset is such that the first 302 and the second 304 seals are overlapping in a region of the upper portion of the package 200, thereby forming an intermediate portion 316. Hence, the combined seal 300 comprises three portions: a top portion 312 formed solely by the first sealing unit 120, a bottom portion 314 formed solely by the second sealing unit 130, and an intermediate portion 316 formed by the first sealing unit 120 as well as the second sealing unit 130.

Thereby, the intermediate portion 316 provides a stronger part of the combined seal 300 than the top portion 312 and the bottom portion 314. In particular, the intermediate portion 316 has been pressed and heated by the first 120 and second 130 sealing units during a longer time as compared to the top portion 312 and the bottom portion 314 which have been pressed solely by the first sealing unit 120 and the second sealing unit 130, respectively.

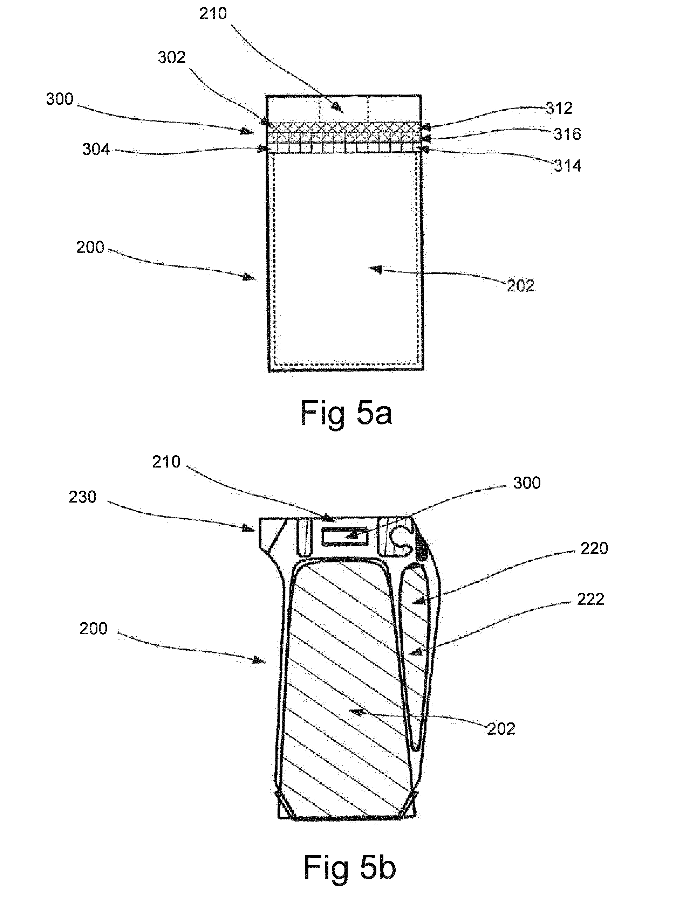

In Fig. 5a there is shown a schematic front view of a flexible package 200 in an upright position wherein a combined seal 300 has been provided on an upper portion of the flexible package 200 in accordance with an embodiment of the inventive concept. It is noted that the dimensions of the combined seal 300 have been exaggarated for illustrative purposes. According to this embodiment, the combined seal 300 extends across the entire package 200 in the transverse direction of the package. In particular, the combined seal 300 transverse a filling channel 210 of the package 200, thereby sealing the product within a compartment 202 of the package 200 which is defined by the broken lines in Fig. 5a. In particular, the intermediate portion 316 transverses the filling channel 210 of the package 200 for forming a sufficient seal. According to the embodiment in Fig. 5a, the filling channel 210 also operates as an opening portion of the package 200.

In Fig. 5b there is shown a schematic front view of a flexible package 200 in an upright position wherein a combined seal 300 has been provided on an upper portion of the flexible package 200 in accordance with another embodiment of the inventive concept. The tilted lines in Fig. 5b indicate a cross-sectional view of the package 200. It is understood that the combined seal 300 comprises a first 302 and a second 304 seal as explained above, and thereby a top portion 312, a bottom portion 314 and an intermediate portion 316. The combined seal 300 transverses the filling channel 210 of the package 200, thereby sealing the product within the compartment 202 of the package 200. In particular, the intermediate portion 316 transverses the filling channel 210 of the package 200 for forming a sufficient seal.

It is clear that Fig. 5b indicates an exemplary position of the combined seal 300 and that, according to alternative embodiments, the combined seal 300 may be located at different positions. For example, the combined seal 300 may be located closer to or farther away from the top of the package 200. Also, the combined seal 300 may be shifted to the left or the right in Fig. 5b. However, it is important that the combined seal 300 transverse the filling channel 210 within the package 200 for providing sufficient sealing of the package 200.

The flexible package 200 according to the embodiment in Fig. 5b further comprises a handle portion 220 which is formed by a gas-filled duct 222. Moreover, the package 200 comprises an opening portion 230 comprising a tab which may be torn apart for allowing a user to access the product from the package 200.

The gas-filling unit 140 is arranged to fill the package 200 with gas, such as air, in the duct 222 for forming the handle portion 220 of the package 200 in Fig. 5b. The gas-filling unit 140 comprises a nozzle (not shown) for introducing air into the duct 222. The gas-filling unit 140 is also arranged to seal the duct 222 at an upper portion thereof for containing the gas in the handle portion 220.

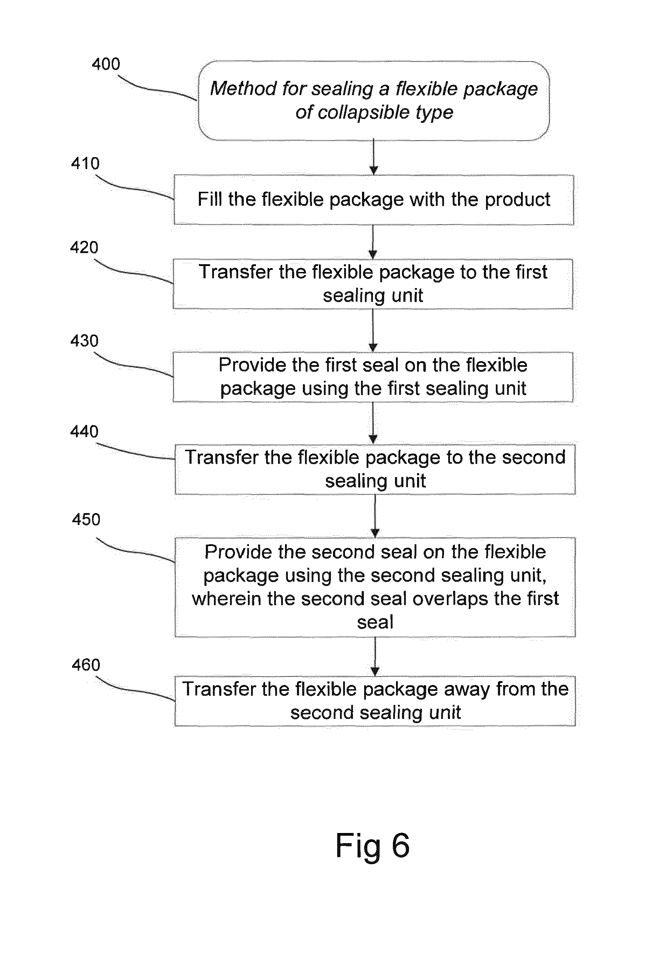

Next, a method for sealing the flexible package 200 will be described according to an embodiment of the present inventive concept with reference to the flow chart in Fig. 6. The method may be implemented in the production line 100 which in particular comprises the first sealing unit 120 and the second sealing unit 130 as has been described in the above. The flexible package 200 is provided to the production line 100 from a web of packages as has been described above.

First, the flexible package 200 is transferred by means of the transfer unit (not shown) to the filling unit 110. At the filling unit 110, the flexible package 200 is filled with a product, such as a liquid product (Box 410). More specifically, a top seal is first removed from the package 200 for accessing the filling channel 210 of the package 200. Thereafter, the filling channel 210 is opened by means of the suction cup, thereby forming an opening, and the filling nozzle is inserted into the filling channel 210 and the compartment 202 is filled with the product. The filling nozzle is subsequently removed from the filling channel 210.

Thereafter, the flexible package 200 is transferred by the transfer unit from the filling unit 110 to the first sealing unit 120 (Box 420). Once at the first sealing unit 120, the first seal 302 is provided on the package 200 (Box 430) according to the above. The first seal 302 is provided to the package 200 during a first sealing time *t₁*.

The flexible package 200 is then transferred by the transfer unit from the first sealing unit 120 to the second sealing unit 130 (Box 440). At the second sealing unit 130, the second seal 304 is provided on the package 200 (Box 450) according to the above. The second seal 304 is provided to the package 200 during a second sealing time *t₂*.

The total sealing time is given by the sum of the first and second sealing times, i.e. *t = t₁* + *t₂*. The total sealing time *t* is chosen to be longer than or equal to a critical sealing time *t_{crit}* which is sufficiently long for obtaining a sufficient seal. Additionally, the applied pressure *P* to the package 200 between the abutment jaws 122, 132 and the permanently heated sealing jaws 124, 134 and temperature *T* of the permanently heated sealing jaws 124, 134 are chosen suitably for obtaining a sufficient seal. In other words, *P≥P_{crit}* and *T≥T_{crit},* where *P_{crit}* and *T_{crit}* is a critical pressure and a critical temperature, respectively.

Lastly, the package 200 is transferred away from the second sealing unit 130 (Box 460). Thereafter, the package 200 may be further processed. By way of example, the package 200 may be transferred to the gas-filling unit 140. At the gas-filling unit 140, the duct 222 may be gas-filled by a gas such as air, cf. the package in Fig. 5b. According to the embodiment in Fig. 5b, the gas-filled duct 222 forms a volume formed by two opposing side walls. By means of the gas-filled duct 222, the rigidity of the package 200 increases.

Moreover, after the package 200 has been provided with a gas-filled handle portion 220, it may be transferred to other units in the production line 100. For example, the package 200 may be transferred to a packing unit wherein the package 200 becomes packed in a box (not shown). Before being packed, the package 200 may be adjusted or aligned to a suitable position and orientation, by performing a rectilinear displacement of the package 200 and by rotating the package 200 around one or several axes.

According to an alternative embodiment, however, the package 200 is not provided with a duct 222 and there is no need for a gas-filling unit 140 in the production line 100. A non-limiting example of such a package 200 is provided in Fig. 5a.

It is understood that the method described above may be repeated for a plurality of packages 200. As described in the above, the packages 200 may be provided to a production line 100 in a row. Moreover, multiple packages 200 arranged side-by-side may be provided to the production line 100. For example, there may be a pair of packages 200 provided side-by-side as shown in Fig. 2. Additionally, it is clear that there may be a plurality of production lines 100 arranged side-by-side. In these cases, a separation unit (not shown) may be located before the filling unit 110 for separating the plurality of packages 200 from each other.

The invention has mainly been described above with reference to a few embodiments. However, as is readily appreciated by a person skilled in the art, other embodiments than the ones disclosed above are equally possible within the scope of the invention, as defined by the appended patent claims. For example, the particular order of the various units included in the production line 100 may be varied. In relation to this, the steps comprised in the method may also be varied. Additionally, the particular form of the sealing units described must be considered as non-limiting as there are other ways of designing the sealing units. For example, the shape and/or the material of the abutment jaw may be different. Also, according to alternative embodiments, the sealing jaw does not have to be permanently heated. For example, there may be a separate heating member arranged next to the sealing jaw and/or abutment jaw for providing an improved sealing by means of intermittent heating.

## Claims

1. A device for sealing a flexible package of collapsible type comprising
a first sealing unit arranged to provide a first seal extending transverse a filling channel of the flexible package and
a second sealing unit arranged to provide a second seal extending transverse a filling channel of the flexible package, said second seal overlapping said first seal such that a combined seal is provided comprising a top portion formed solely by the first sealing unit, an intermediate portion formed by the first and the second sealing unit, and a bottom portion formed solely by the second sealing unit.

2. The device according to claim 1, further comprising a transfer unit arranged to transfer said flexible package from said first sealing unit to said second sealing unit.

3. The device according to claim 1 or 2, wherein said first seal has a width in the range of 1 to 5 millimeters.

4. The device according to any of the preceding claims, wherein said second seal has a width in the range of 1 to 5 millimeters.

5. The device according to any of the preceding claims, wherein said intermediate portion has a width in the range of 1 to 5 millimeters.

6. The device according to any of the preceding claims, wherein operating parameters of said first and second sealing unit are set such that a sealing characteristic above a threshold value is obtained in said intermediate portion, wherein the operating parameters comprise a time parameter, a temperature parameter and a pressure parameter.

7. The device according to any of the preceding claims, wherein said first and second seals are parallel.

8. The device according to any of the preceding claims, wherein said first and/or second sealing unit comprises a permanently heated sealing jaw.

9. The device according to any of the preceding claims, wherein said first and/or second sealing unit comprises an abutment jaw having an engagement portion arranged to engage with the flexible package for providing said first and/or second seal.

10. Filling machine comprising a device according to any of claims 1 to 9, wherein said first and second sealing units are stationary.

11. A method for sealing a flexible package of collapsible type comprising
providing a first seal extending transverse a filling channel of the flexible package,
providing a second seal extending transverse a filling channel of the flexible package,
said second seal overlapping said first seal such that a combined seal is provided comprising a top portion formed solely by the first sealing unit, an intermediate portion formed by the first and the second sealing unit, and a bottom portion formed solely by the second sealing unit.

12. The method according to claim 11, further comprising transferring
said flexible package from said first sealing unit to said second unit.

13. The method according to claim 11 or 12, wherein said first seal and said second seal are provided intermittently.
